# EUROPEAN PATENT SPECIFICATION

(11) **EP 3 530 526 B1**
(45) Date of publication and mention of the grant of the patent: **23.09.2020**
(21) Application number: 18191995.2
(22) Date of filing: 31.08.2018
(51) Int. Cl.: B60R 21/2338

(54) **AIRBAG APPARATUS FOR VEHICLE**
AIRBAGVORRICHTUNG FÜR FAHRZEUG
APPAREIL FORMANT AIRBAG POUR VÉHICULE

(30) Priority: 23.02.2018 KR 20180021623
(43) Date of publication of application: 28.08.2019
(73) Proprietor: Hyundai Motor Company, Seoul 06797 (KR); Kia Motors Corporation, Seoul 06797 (KR)
(72) Inventor: CHOI, Jae Ho, 07376 Seoul (KR)
(74) Representative: Viering, Jentschura & Partner mbB Patent- und Rechtsanwälte

(56) References cited:
- WO-A1-2017/058575
- DE-A1- 19 930 196
- DE-A1-102015 104 092
- US-B1- 9 650 011

## Description

### TECHNICAL FIELD

The present disclosure relates to an airbag apparatus for a vehicle, which provides stable protection to an occupant against vehicle collisions in various collision directions.

### BACKGROUND

As well known in the art, techniques for ensuring occupant safety have been developed in addition to techniques for improving a driving performance, convenience, and functionality of a vehicle.

In particular, of various safety devices applied to vehicles, an airbag has been used as the most efficient system of protecting occupants.

Such an airbag is a device for protecting a driver and passengers in the event of a vehicle collision, and is configured with a collision sensor for detecting the vehicle collision, a controller for activating the airbag according to the detection result of the collision sensor, and an airbag module for activating the airbag in response to a signal from the controller. The airbag is categorized into a driver airbag, a passenger airbag, a side airbag, a roof airbag, etc., depending on an installation position and a protection target.

In recent years, safety has been considered not only for a frontal collision and a side collision but also for an oblique collision in which a collision occurs from a diagonal direction of a vehicle. However, an airbag that deploys in front of an occupant safely protects the occupant only in the event of the frontal collision, but may not cope with occupant's motion in the event of the oblique collision.

In other words, in the event of the oblique collision, the occupant's upper body is moved forwards in an oblique manner, so that the occupant's upper body may not be positioned within a protection range of the airbag that deploys in front of the occupant. In addition, the airbag that deploys in front of the occupant may cause rotation of the head and the torso during the oblique collision, resulting in a secondary injury.

The foregoing is intended merely to aid in the understanding of the background of the present disclosure, and is not intended to mean that the present disclosure falls within the purview of the related art that is already known to those skilled in the art. The document WO2017/058575 A1 discloses an airbag apparatus according to the preamble of claim 1.

### SUMMARY

The present disclosure has been made keeping in mind the above problems occurring in the related art, and the present invention provides an airbag apparatus for a vehicle according to independent claim 1, which provides stable protection to an occupant by varying an inflation shape of the airbag apparatus depending on vehicle collisions in various collision directions such as a frontal collision, a side collision, and an oblique collision. Further embodiments of the invention are described in the dependent claims.

In the case of a collision mode in which the occupant impacts a surface of the airbag cushion, the surface facing the occupant, the cushion adjusting mechanism may cut the second left and right tethers rather than cutting the first left and right tethers.

In the case of a collision mode in which the occupant impacts a left side of the airbag cushion, the cushion adjusting mechanism may cut the first and second left tethers rather than cutting the first and second right tethers.

In the case of a collision mode in which the occupant impacts a left side of the airbag cushion, the cushion adjusting mechanism may cut the first and second left tethers and the second right tether rather than cutting the first right tether.

In the case of a collision mode in which the occupant impacts a right side of the airbag cushion, the cushion adjusting mechanism may cut the first and second right tethers rather than cutting the first and second left tethers, such that the airbag cushion is inflated rightwards.

In the case of a collision mode in which the occupant impacts a right side of the airbag cushion, the cushion adjusting mechanism may cut the first and second right tethers and the second left tether rather than cutting the first left tether.

When the vehicle collision occurs while the occupant is seated in a passenger's seat, the cushion adjusting mechanism may cut the first left tether when the occupant is seated in a left passenger's seat, and may cut the first right tether when the occupant is seated in a right passenger's seat.

In the case of a collision mode in which the occupant impacts a left side of the airbag cushion, the cushion adjusting mechanism may cut the first right tether and the first and second left tethers rather than cutting the second right tether and the third left tether.

In the case of a collision mode in which the occupant impacts a right side of the airbag cushion, the cushion adjusting mechanism may cut the first left tether and the first and second right tethers rather than cutting the second left tether and the third right tether.

The cushion adjusting mechanism may include: a cutter provided on the front side of the airbag cushion and configured to selectively cut the left tether portion or the right tether portion during operation; and a controller receiving vehicle collision information, and controlling the cutter such that the first cushion portion of the airbag cushion which is associated with the direction in which the occupant is moved in the event of the vehicle collision is inflated more than the second cushion portion of the airbag cushion.

The left tether portion and the right tether portion may be formed in a panel shape extending in a vertical direction of the airbag cushion.

The airbag cushion may be configured such that the right and left chambers are folded leftwards and rightwards, respectively, and then rear end portions of the left and right chambers are folded forwards, whereby the airbag cushion is inflated and deployed toward the occupant and then is deployed leftwards and rightwards.

The airbag apparatus for a vehicle having the above-described configuration varies the inflation shape thereof depending on vehicle collisions in various collision directions such as a frontal collision, a side collision, an oblique collision, etc. Thus, it is possible to stably protect an occupant, to reduce impact to the occupant, and to prevent twisting of the head or the torso of the occupant cushioned by the airbag apparatus and thus to provide optimal occupant protection performance for the occupant.

### BRIEF DESCRIPTION OF THE DRAWINGS

The above and other objects, features, and other advantages of the present disclosure will be more clearly understood from the following detailed description when taken in conjunction with the accompanying drawings, in which:
FIG. 1 is a view showing an airbag apparatus for a vehicle according to an embodiment of the present disclosure; and
FIGS. 2 to 10 are views showing the airbag apparatus for the vehicle shown in FIG. 1.

### DETAILED DESCRIPTION

Hereinbelow, an airbag apparatus for a vehicle according to exemplary embodiments of the present disclosure will be described in detail with reference to the accompanying drawings. Throughout the drawings, the same reference numerals will refer to the same or like parts.

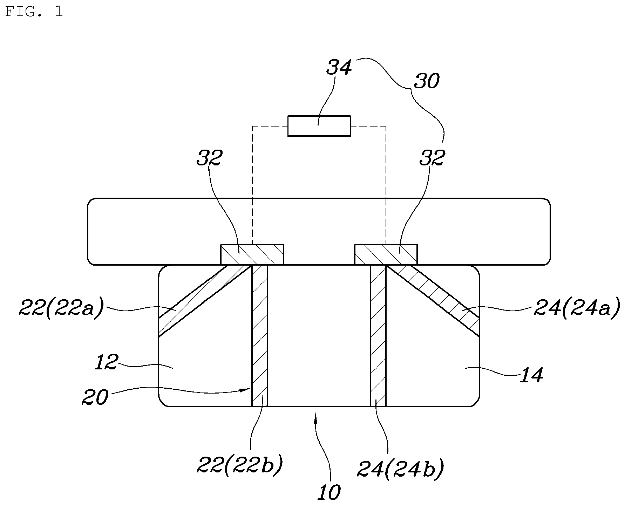

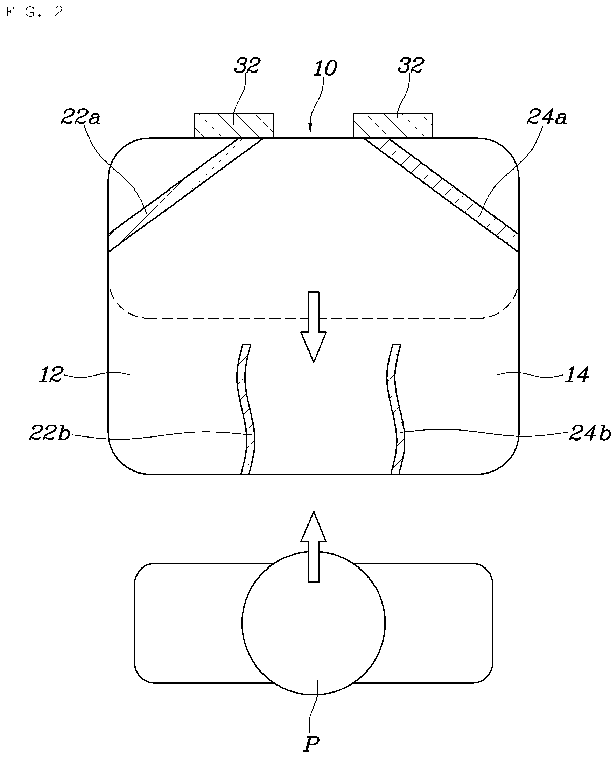

FIG. 1 is a view showing an airbag apparatus for a vehicle according to an embodiment of the present disclosure, and FIGS. 2 to 10 are views showing the airbag apparatus for the vehicle shown in FIG. 1.

As shown in FIG. 1, an airbag apparatus for a vehicle according to the present disclosure includes: an airbag cushion 10 provided in the vehicle in front of an occupant P and inflated rearwards toward the occupant P and laterally upon deployment; a plurality restraint tethers 20 each fixed at a first end thereof to a front side of the airbag cushion 10 and connected at a second end thereof to a rear end portion or a side end portion of the airbag cushion 10, the restraint tether being configured to restrain inflation of the airbag cushion 10 so as to determine a shape of the airbag cushion 10 upon full deployment; and a cushion adjusting mechanism 30 configured to selectively cut or not cut the restraint tethers 20 upon the deployment, such that a first cushion portion of the airbag cushion 10 which is associated with a direction in which the occupant P is moved in the event of a vehicle collision is inflated more than a second cushion portion of the airbag cushion 10. Herein, the front side of the airbag cushion 10 to which the first end of the restraint tether 20 is connected is a front end portion of the airbag cushion 10.

As such, according to the present disclosure, the shape of the airbag cushion 10 upon full deployment is determined by the plurality of restraint tethers 20 provided therein, and the plurality of restraint tethers 20 is selectively cut or not cut by the cushion adjusting mechanism 30, whereby the shape of the airbag cushion 10 varies upon full deployment. In particular, the cushion adjusting mechanism 30 allows the plurality of restraint tethers 20 to be cut or not cut such that the first cushion portion of the airbag cushion 10 is inflated toward the direction in which the occupant P is moved in the event of a vehicle collision.

In other words, a moving direction of the occupant P varies depending on a direction of a vehicle collision, and one of the restraint tethers 20 which is associated with the first cushion portion corresponding to the moving direction of the occupant P is cut by the cushion adjusting mechanism 30. Accordingly, the first cushion portion associated with the cut restraint tether 20 is inflated more than the second cushion portion associated with an uncut remaining one of the restraint tethers 20.

Consequently, the shape of the airbag cushion 10 upon full deployment is determined in response to the occupant P moving in the direction of the vehicle collision, whereby the occupant P can be safely protected by the airbag cushion 10 in the event of a vehicle collision.

In detail, as shown in FIG. 1, the airbag cushion 10 is configured with a left chamber 12 and a right chamber 14 communicating with each other, and the restraint tethers 20 may be configured with a left tether portion 22 restraining inflation of the left chamber 12 and a right tether portion 24 restraining inflation of the right chamber 14.

Herein, the airbag cushion 10 is divided into the left chamber 12 and the right chamber 14, but the left and right chambers 12 and 14 communicate with each other, so that the airbag cushion 10 may be formed as a single body. The left and right chambers 12 and 14 may be formed such that upon full deployment, the left and right chambers 12 and 14 are inflated leftwards and rightwards, respectively, to a size larger than a size of the occupant P.

Furthermore, the left tether portion 22 and the right tether portion 24 are formed in a panel shape extending in a vertical direction of the airbag cushion 10, such that restraint forces exerting on the left and right chambers 12 and 14 are secured, and vertical shapes of the left and right chambers 12 and 14 upon full deployment are constant.

The left and right tether portions 22 and 24 are respectively provided in the left and right chambers 12 and 14, whereby shapes of the left and right chambers 12 and 14 upon full deployment are determined. In other words, in a case where the left tether portion 22 is cut, the restraint force exerting on the left chamber 12 is released and thus the left chamber 12 may be inflated to a size larger than when the left tether portion 22 remains uncut. In a case where the right tether portion 24 is cut, the right chamber 14 may be inflated to a size larger than when the right tether portion 24 remains uncut.

In detail, as shown in FIG. 1, the left tether portion 22 is configured with a first left tether 22a fixed at a first end thereof to the front side of the airbag cushion 10 and connected at a second end thereof to a left end portion of the left chamber 12, and a second left tether 22b fixed at a first end thereof to the front side of the airbag cushion 10 and connected at a second end thereof to a rear end portion of the left chamber 12. The right tether portion 24 is configured with a first right tether 24a fixed at a first end thereof to the front side of the airbag cushion 10 and connected at a second end thereof to a right end portion of the right chamber 14, and a second right tether 24b fixed at a first end thereof to the front side of the airbag cushion 10 and connected at a second end thereof to a rear end portion of the right chamber 14.

In other words, the first left tether 22a of the left tether portion 22 restrains leftward inflation of the left chamber 12 while the second left tether 22b of the left tether portion 22 restrains rearward inflation of the left chamber 12, whereby the shape of the left chamber 12 upon full deployment is determined by the first and second left tethers 22a and 22b.

Furthermore, the first right tether 24a of the right tether portion 24 restrains rightward inflation of the right chamber 14 while the second right tether 24b of the right tether portion 24 restrains rearward inflation of the right chamber 14, whereby the shape of the right chamber 14 upon full deployment is determined by the first and second right tethers 24a and 24b.

As a result, the degree of inflation of the left chamber 12 with respect to forward and leftward directions is determined by the first and second left tethers 22a and 22b, and the degree of inflation of the right chamber 14 with respect to forward and leftward directions is determined by the first and second right tethers 24a and 24b.

Hereinafter, it is to be described in detail that the inflation shape of the airbag cushion 10 is determined as the restraint tethers 20 are selectively cut or not cut by the cushion adjusting mechanism 30.

The cushion adjusting mechanism 30 may include: a cutter 32 installed on the front side of the airbag cushion 10 and configured to selectively cut the left tether portion 22 or the right tether portion 24 during operation; and a controller 34 receiving vehicle collision information, and controlling the cutter 32 such that the first cushion portion of the airbag cushion 10 which is associated with the direction in which the occupant P is moved in the event of a vehicle collision is inflated more than the second cushion portion of the airbag cushion 10.

Herein, the cutter 32 is operated under the control of the controller 34, and a method of transferring the restraint tethers 20 by using a cutting blade and an electromagnet may be employed. A technique of cutting the tethers in response to signal input is variously known in the art, and thus a detailed description thereof will be omitted. Furthermore, one cutter 32 may selectively cut or not cut a plurality of left tether portions 22 and a plurality of right tether portions 24. Alternately, a plurality of cutters 32 may be provided such that the cutters 32 are provided respectively at the left and right tether portions 22 and 24 to selectively cut or not cut the left and right tether portions 22 and 24.

In addition, the controller 34 receives the vehicle collision information and controls the cutter 32. Herein, the vehicle collision information is received from a collision detection sensor using a laser or an ultrasonic wave, and the direction in which the occupant P is moved according to the direction of a vehicle collision is predetermined. Accordingly, in the event of a vehicle collision, the controller 34 controls the cutter 32 to selectively cut or not cut the restraint tethers 20, thus allowing the airbag cushion 10 to be inflated in response to the moving direction of the occupant P.

The details will be described according to various embodiments. As shown in FIG. 2, in the case of a collision mode in which the occupant P impacts a surface of the airbag cushion 10, the surface facing the occupant P, the cushion adjusting mechanism 30 may cut the second left and right tethers 22b and 24b rather than cutting the first left and right tethers 22a and 24a.

This is a situation where the front of a vehicle is impacted, and the controller 34 determines that the situation is the collision mode in which the occupant P impacts the occupant-facing surface of the airbag cushion 10, and thus allows the second left and right tethers 22b and 24b to be cut while allowing the first left and right tethers 22a and 24a to remain uncut.

Consequently, as shown in FIG. 2, the left chamber 12 and the right chamber 14 of the airbag cushion 10 are allowed to inflate at the rear end portions thereof rearwards only while being restrained from inflating leftwards and rightwards, respectively. Thus, it is possible to safely protect the occupant P in response to the movement of the occupant P to the front of a vehicle.

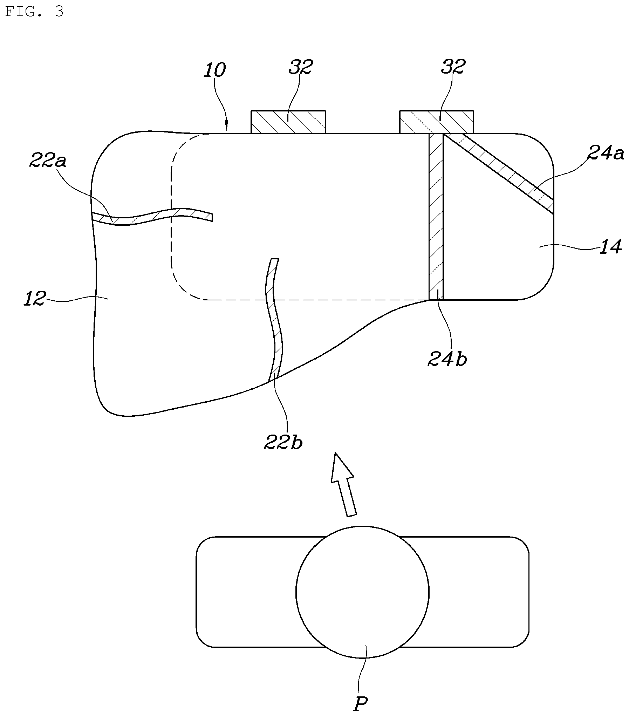

On the other hand, as shown in FIG. 3, in the case of a collision mode in which the occupant P impacts the left side of the airbag cushion 10, the cushion adjusting mechanism 30 may cut the first and second left tethers 22a and 22b rather than cutting the first and second right tethers 24a and 24b.

This is a situation where the left front of a vehicle is impacted, and the controller 34 determines that the situation is the collision mode in which the occupant P impacts the left side of the airbag cushion 10, and thus allows the first and second left tethers 22a and 22b to be cut while allowing the first and second right tethers 24a and 24b to remain uncut.

Consequently, as shown in FIG. 3, the left chamber 12 of the airbag cushion 10 is allowed to inflate leftwards and rearwards, while the right chamber 14 is restrained from inflating rightwards. Thus, it is possible to safely protect the occupant P in response to the movement of the occupant P to the left front of a vehicle. In addition, it is possible to prevent the neck of the occupant P from twisting due to the movement of the occupant P to the left front of a vehicle.

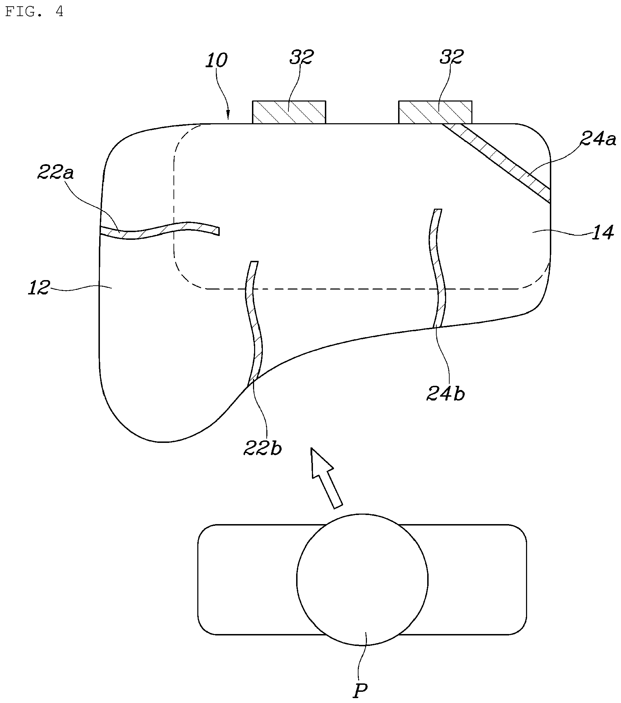

On the other hand, as shown in FIG. 4, in the case of a collision mode in which the occupant P impacts the left side of the airbag cushion 10, the cushion adjusting mechanism 30 may cut the first and second left tethers 22a and 22b and the second right tether 24b rather than cutting the first right tether 24a.

This is a situation where the left front of a vehicle is impacted, and the controller 34 determines that the situation is the collision mode in which the occupant P impacts the left side of the airbag cushion 10, and thus allows the first and second left tethers 22a and 22b and the second right tether 24b to be cut while allowing the first right tether 24a to remain uncut.

Consequently, as shown in FIG. 4, the left chamber 12 of the airbag cushion 10 is allowed to fully inflate and at the same time the right chamber 14 is allowed to inflate rearwards. Thus, it is possible to safely protect the occupant P in response to the movement of the occupant P to the left front of a vehicle.

Herein, the embodiment shown in FIG. 4 shows the same situation where the occupant P is moved to the left front of a vehicle as in the embodiment shown in FIG. 3. However, in the embodiment shown in FIG. 4, both the left and right chambers 12 and 14 are deployed rearwards, which is more effective at performing stable protection with respect to the front of a vehicle. Accordingly, the embodiment shown in FIG. 3 and the embodiment shown in FIG. 4 may be determined according to the degree to which the occupant P is moved to the left of a vehicle in the event of a vehicle collision, such as, when the occupant P is moved to the left of the vehicle to be relatively far from a longitudinal direction of the vehicle, the embodiment shown in FIG. 3 may be performed, and when the occupant P is moved from the left front to the front of the vehicle to be relatively close to the longitudinal direction of the vehicle, the embodiment shown in FIG. 4 may be performed.

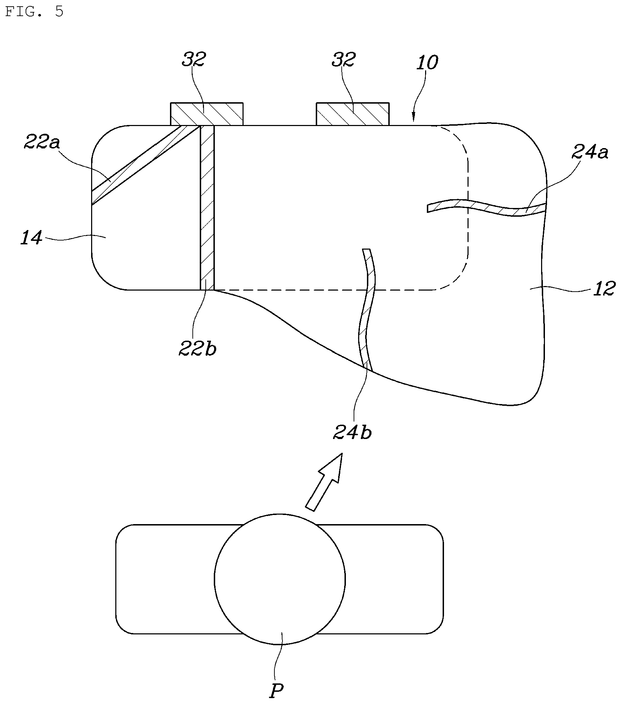

On the other hand, as shown in FIG. 5, in the case of a collision mode in which the occupant P impacts the right side of the airbag cushion 10, the cushion adjusting mechanism 30 may cut the first and second right tethers 24a and 24b rather than cutting the first and second left tethers 22a and 22b, such that the airbag cushion 10 is inflated rightwards.

This is a situation where the right front of a vehicle is impacted, and the controller 34 determines that the situation is the collision mode in which the occupant P impacts the right side of the airbag cushion 10, and thus allows the first and second right tethers 24a and 24b to be cut while allowing the first and second left tethers 22a and 22b to remain uncut.

Consequently, as shown in FIG. 5, the right chamber 14 of the airbag cushion 10 is allowed to inflate rightwards and rearwards, while the left chamber 12 is restrained from inflating leftwards. Thus, it is possible to safely protect the occupant P in response to the movement of the occupant P to the right front of a vehicle. In addition, it is possible to prevent the neck of the occupant P from twisting due to the movement of the occupant P to the right front of the vehicle.

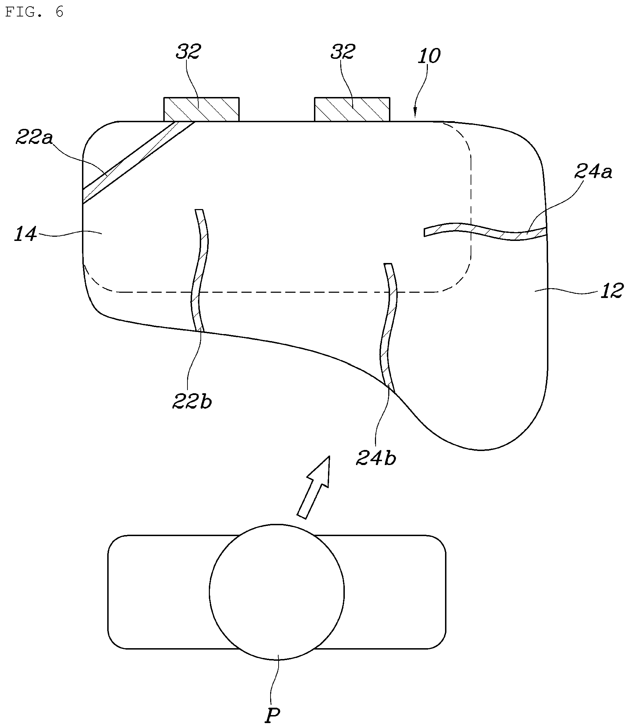

On the other hand, as shown in FIG. 6, in the case of a collision mode in which the occupant P impacts the right side of the airbag cushion 10, the cushion adjusting mechanism 30 may cut the first and second right tethers 24a and 24b and the second left tether 22b rather than cutting the first left tether 22a.

This is a situation where the right front of a vehicle is impacted, and the controller 34 determines that the situation is the collision mode in which the occupant P impacts the right side of the airbag cushion 10, and thus allows the first and second right tethers 24a and 24b and the second left tether 22b to be cut while allowing the first left tether 22a to remain uncut.

Consequently, as shown in FIG. 6, the right chamber 14 of the airbag cushion 10 is allowed to fully inflate and at the same time the left chamber 12 is allowed to inflate rearwards. Thus, it is possible to safely protect the occupant P in response to the movement of the occupant P to the right front of a vehicle.

The embodiment shown in FIG. 5 and the embodiment shown in FIG. 6 may be determined according to the degree to which the occupant P is moved to the right of a vehicle in the event of a vehicle collision, such as, when the occupant P is moved to the right of the vehicle to be relatively far from the longitudinal direction of the vehicle, the embodiment shown in FIG. 5 may be performed, and when the occupant P is moved from the right front to the front of the vehicle to be relatively close to the longitudinal direction of the vehicle, the embodiment shown in FIG. 6 may be performed.

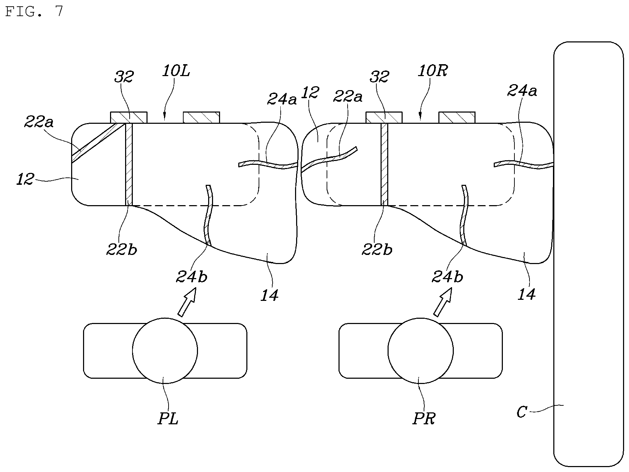

On the other hand, as shown in FIG. 7, when a vehicle collision occurs while the occupant P is seated in a passenger's seat, the cushion adjusting mechanism 30 may cut the first left tether 22a when the occupant P is seated in a left passenger's seat, and may cut the first right tether 24a when the occupant P is seated in a right passenger's seat.

The airbag cushion 10 according to the present disclosure may be provided in front of all occupant seats of a vehicle. For example, when the right front of a vehicle is impacted while the occupant P is seated in both a driver's seat and a passenger's seat, as shown in FIG. 7, both a driver's seat occupant PL and a passenger's seat occupant PR are moved to the right front of the vehicle. Accordingly, an airbag cushion 10L provided in the driver's seat and an airbag cushion 10R provided in the passenger's seat are configured such that the right chamber 14 of each of the airbag cushions 10L and 10R is inflated further, whereby the occupant P is protected against the right front collision.

Herein, the cushion adjusting mechanism 30 may cut the first left tether 22a of the airbag cushion 10R provided in the passenger's seat such that the left chamber 12 is inflated further leftwards. Thus, the driver's seat occupant PL can be more stably cushioned and protected by the airbag cushion 10R provided in the passenger's seat. In addition, the left chamber 12 of the airbag cushion 10R provided in the passenger's seat supports the right chamber 14 of the airbag cushion 10L provided in the driver's seat, and thus a cushioning force of the airbag cushion 10 is secured. Furthermore, a gap defined between the airbag cushion 10L provided in the driver's seat and the airbag cushion 10R provided in the passenger's seat is minimized, and thus the driver's seat occupant PL is prevented from entering between the left and right airbag cushions 10L and 10R. Herein, in the case of the passenger's seat occupant PR, a cushioning force may be secured by a curtain airbag C.

As such, when an occupant is seated in the passenger's seat in a vehicle, the shape of the airbag cushion 10 upon inflation varies depending on the direction of a vehicle collision so as to cover a more wide protection range, whereby safety of the occupant in the event of the collision can be further improved.

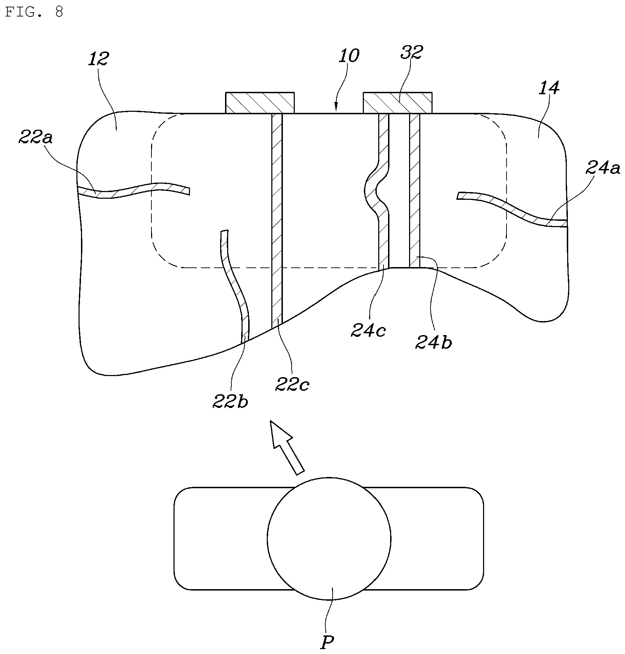

According to the invention, as shown in FIGS. 8 to 9, the left tether portion 22 further includes a third left tether 22c fixed at a first end thereof to the front side of the airbag cushion 10 and connected at a second end thereof to the rear end portion of the left chamber 12, the third left tether being formed longer than the second left tether 22b. The right tether portion 24 further includes a third right tether 24c fixed at a first end thereof to the front side of the airbag cushion 10 and connected at a second end thereof to the rear end portion of the right chamber 14, the third right tether being formed longer than the second right tether 24b.

The third left and right tethers 22c and 24c serve to guide the shape of the airbag cushion 10 that inflates rearwards as the second left and right tethers 22b and 24b are cut. In other words, the third left tether 22c is formed longer than the second left tether 22b, whereby the inflation distance of the left chamber 12, which inflates rearwards as the second left tether 22b is cut, is limited to a distance that corresponds to the length of the third left tether 22c and thus the shape of the left chamber 12 upon full deployment is determined. Similarly, the third right tether 24c is configured such that the shape of the right chamber 14 upon full deployment is determined as the second right tether 24b is cut.

In detail, as shown in FIG. 8, in the case of a collision mode in which the occupant P impacts the left side of the airbag cushion 10, the cushion adjusting mechanism 30 may cut the first right tether 24a and the first and second left tethers 22a and 22b rather than cutting the second right tether 24b and the third left tether 22c.

In other words, in a case where the occupant P impacts the left side of the airbag cushion 10 as the left front of a vehicle is impacted, the first right tether 24a and the first and second left tethers 22a and 22b are cut, while the second right tether 24b and the third left tether 22c remain uncut. Accordingly, the left chamber 12 inflates entirely but the inflation distance thereof is limited to a distance that corresponds to the length of the third left tether 22c, and the right chamber 14 inflates rightwards only.

Consequently, the airbag cushion 10 is inflated as shown in FIG. 8. When the occupant P is brought into contact with the left chamber 12 as the occupant P is moved to the left front of a vehicle, the occupant P is guided to the right chamber 14 and thus the upper body of the occupant P can be prevented from twisting.

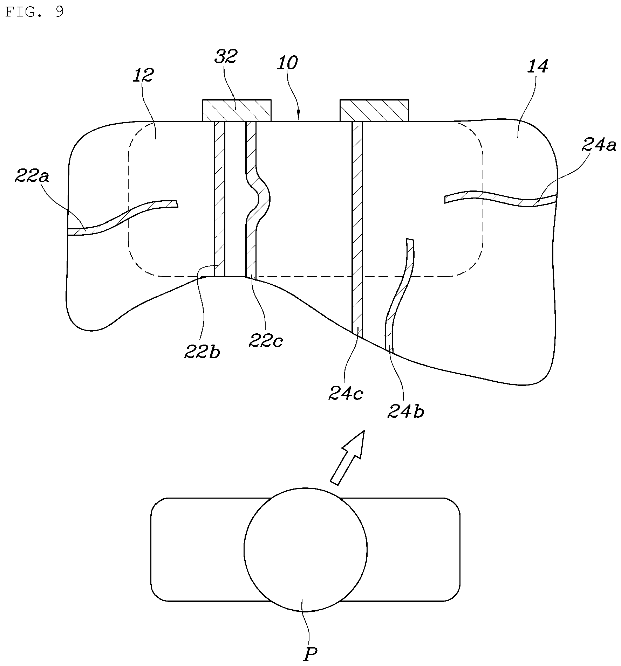

On the other hand, as shown in FIG. 9, in the case of a collision mode in which the occupant P impacts the right side of the airbag cushion 10, the cushion adjusting mechanism 30 may cut the first left tether 22a and the first and second right tethers 24a and 24b rather than cutting the second left tether 22b and the third right tether 24c.

In other words, in a case where the occupant P impacts the right side of the airbag cushion 10 as the right front of a vehicle is impacted, the first left tether 22a and the first and second right tethers 24a and 24b are cut, while the second left tether 22b and the third right tether 24c remain uncut. Accordingly, the right chamber 14 inflates entirely but the inflation distance thereof is limited to a distance that corresponds to the length of the third right tether 24c, and the left chamber 12 inflates leftwards only.

Consequently, the airbag cushion 10 is inflated as shown in FIG. 9. When the occupant P is brought into contact with the right chamber 14 as the occupant P is moved to the right front of a vehicle, the occupant P is guided to the left chamber 12 and thus the upper body of the occupant P can be prevented from twisting.

On the other hand, the airbag cushion 10 may be configured such that the right and left chambers 14 and 12 are folded leftwards and rightwards, respectively, and then the rear end portions of the right and left chambers 14 and 12 are folded forwards, whereby the airbag cushion 10 is inflated and deployed toward the occupant P and then is deployed leftwards and rightwards.

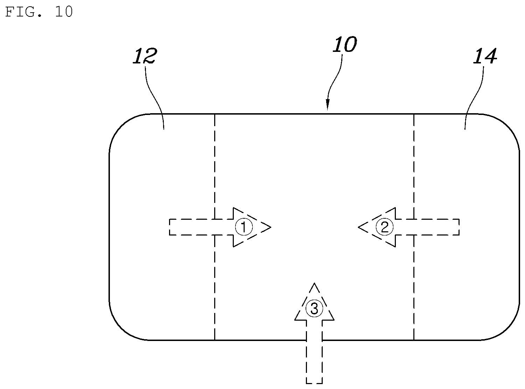

As shown in FIG. 10, the airbag cushion 10 may be configured that the left chamber 12 is partially folded rightwards and the right chamber 14 is partially folded leftwards, and then the rear end portions of the left and right chambers 12 and 14 are folded forwards. Accordingly, the airbag cushion 10 is inflated such that the rear end portions of the left and right chambers 12 and 14 firstly inflate rearwards toward the occupant P in a reverse order in which the left and right chambers 12 and 14 have been folded, thus providing quick protection to the occupant P against a vehicle collision. Thereafter, the left chamber 12 or the right chamber 14 can be inflated in response to the moving direction of the occupant P in the event of a vehicle collision.

The airbag apparatus for a vehicle having the above-described configuration varies the inflation shape thereof depending on vehicle collisions in various collision directions such as a frontal collision, a side collision, an oblique collision, etc. Thus, it is possible to stably protect the occupant P, to reduce impact to the occupant P, and to prevent twisting of the head or the torso of the occupant P cushioned by the airbag apparatus and thus to provide optimal occupant protection performance for the occupant P.

Although the exemplary embodiment of the present disclosure has been described for illustrative purposes, those skilled in the art will appreciate that various modifications, additions and substitutions are possible, without departing from the scope of the invention as disclosed in the accompanying claims.

## Claims

1. An airbag apparatus for a vehicle, the airbag apparatus comprising:
an airbag cushion (10) disposed in the vehicle to be in front of an occupant (P), the airbag cushion (10) inflating rearwards toward the occupant (P) and laterally upon deployment;
a plurality of restraint tethers (20), each of which having: a first end connected to a front side of the airbag cushion (10); and a second end connected to a rear end portion or a side end portion of the airbag cushion (10), each of the plurality of restraint tethers (20) restraining inflation of the airbag cushion (10) to determine a shape of the airbag cushion (10) upon full deployment; and
a cushion adjusting mechanism (30) configured to selectively cut or not cut the plurality of restraint tethers (20) upon the deployment, such that a first cushion portion of the airbag cushion (10), which is associated with a direction in which the occupant (P) is moved in an event of a vehicle collision, inflates more than a second cushion portion of the airbag cushion (10),
wherein the airbag cushion (10) has a left chamber (12) and a right chamber (14) communicating with each other, and
each of the plurality of restraint tethers (20) includes a left tether portion (22) restraining inflation of the left chamber (12) and a right tether portion (24) restraining inflation of the right chamber (14),
wherein the left tether portion (22) includes:
a first left tether (22a) having a first end connected to the front side of the airbag cushion (10), and a second end connected to a left end portion of the left chamber (12); and
a second left tether (22b) having a first end connected to the front side of the airbag cushion (10), and a second end connected to a rear end portion of the left chamber (12), and
wherein the right tether portion (24) includes:
a first right tether (24a) having a first end connected to the front side of the airbag cushion (10), and a second end connected to a right end portion of the right chamber (14); and
a second right tether (24b) having a first end connected to the front side of the airbag cushion (10), and a second end connected to a rear end portion of the right chamber (14),
wherein the left tether portion (22) further includes a third left tether (22c) having a first end connected to the front side of the airbag cushion (10), and a second end connected to the rear end portion of the left chamber (12), the third left tether (22c) having a length longer than that of the second left tether (22b), and
the right tether portion (24) further includes a third right tether (24c) having a first end connected to the front side of the airbag cushion (10), and a second end connected to the rear end portion of the right chamber (14), the third right tether (24c) having a length longer than that of the second right tether (24b).

2. The airbag apparatus of claim 1, wherein in a case of a collision mode in which the occupant (P) impacts a surface of the airbag cushion (10), the surface facing the occupant (P), the cushion adjusting mechanism (30) cuts the second left and right tethers (22b, 24b).

3. The airbag apparatus of claim 1, wherein in a case of a collision mode in which the occupant (P) impacts a left side of the airbag cushion (10),
- the cushion adjusting mechanism (30) cuts the first and second left tethers (22a, 22b), or
- the cushion adjusting mechanism (30) cuts the first and second left tethers (22a, 22b) and the second right tether (24b) .

4. The airbag apparatus of claim 1, wherein in a case of a frontal collision mode in which the occupant (P) is seated by moving a seat to the left or a collision mode in which the occupant (P) impacts a left side of the airbag cushion (10), the cushion adjusting mechanism (30) cuts the first and second left tethers (22a, 22b).

5. The airbag apparatus of claim 1, wherein in a case of a collision mode in which the occupant (P) impacts a right side of the airbag cushion (10),
- the cushion adjusting mechanism (30) cuts the first and second right tethers (24a, 24b), such that the airbag cushion (10) inflates rightwards, or
- the cushion adjusting mechanism (30) cuts the first and second right tethers (24a, 24b) and the second left tether (22b).

6. The airbag apparatus of claim 1, wherein in a case of a frontal collision mode in which the occupant (P) is seated by moving a seat to the right or a collision mode in which the occupant (P) impacts a right side of the airbag cushion (10), the cushion adjusting mechanism (30) cuts the first and second right tethers (24a, 24b) and the second left tether (22b).

7. The airbag apparatus of claim 1, wherein when a collision occurs while the occupant (P) is seated in a passenger's seat, the cushion adjusting mechanism (30) cuts the first left tether (22a) when the occupant (P) is seated in a left passenger's seat, and cuts the first right tether (24a) when the occupant (P) is seated in a right passenger's seat.

8. The airbag apparatus of claim 1, wherein in a case of a collision mode in which the occupant (P) impacts a left side of the airbag cushion (10), the cushion adjusting mechanism (30) cuts the first right tether (24a) and the first and second left tethers (22a, 22b).

9. The airbag apparatus of claim 1, wherein in a case of a collision mode in which the occupant (P) impacts a right side of the airbag cushion (10), the cushion adjusting mechanism (30) cuts the first left tether (22a) and the first and second right tethers (24a, 24b).

10. The airbag apparatus of any one of claims 1 to 9, wherein the cushion adjusting mechanism (30) includes:
a cutter (32) disposed at the front side of the airbag cushion (10) and selectively cut the left tether portion (22) or the right tether portion (24); and
a controller (34) configured to receive vehicle collision information, and control the cutter (32) such that the first cushion portion of the airbag cushion (10), which is associated with the direction in which the occupant (P) is moved in the event of the vehicle collision, inflates more than the second cushion portion of the airbag cushion (10).

11. The airbag apparatus of any one of claims 1 to 10, wherein the left tether portion (22) and the right tether portion (24) have a panel shape extending in a vertical direction of the airbag cushion (10).

12. The airbag apparatus of any one of claims 1 to 11, wherein the right and left chambers (14, 12) are folded leftwards and rightwards, respectively, and then rear end portions of the left and right chambers (12, 14) are folded forwards,
wherein the airbag cushion (10) inflates and deploys toward the occupant (P) and then deploys leftwards and rightwards.

## Patentansprüche

1. Airbagvorrichtung für ein Fahrzeug, wobei die Airbagvorrichtung aufweist:
ein Airbagkissen (10), das in dem Fahrzeug angeordnet ist, um vor einem Insassen (P) zu sein, wobei das Airbagkissen (10) beim Entfalten nach hinten in Richtung zu dem Insassen (P) und seitlich aufgeblasen wird,
eine Mehrzahl von Rückhaltegurten (20), von denen jeder aufweist: ein erstes Ende, das mit einer Vorderseite des Airbagkissens (10) verbunden ist, und ein zweites Ende, das mit einem hinteren Endabschnitt oder einem seitlichen Endabschnitt des Airbagkissens (10) verbunden ist, wobei jeder aus der Mehrzahl von Rückhaltegurten (20) das Aufblasen des Airbagkissens (10) einschränkt, um bei einem vollständigen Aufblasen eine Form des Airbagkissens (10) zu bestimmen, und
einen Kisseneinstellmechanismus (30), der konfiguriert ist, um die Mehrzahl von Rückhaltegurten (20) beim Entfalten wahlweise zu durchtrennen oder nicht zu durchtrennen, so dass ein erster Kissenabschnitt des Airbagkissens (10), der einer Richtung zugeordnet ist, in der der Insasse (P) im Fall eines Fahrzeugaufpralls bewegt wird, mehr als ein zweiter Kissenabschnitt des Airbagkissens (10) aufgeblasen wird,
wobei das Airbagkissen (10) eine linke Kammer (12) und eine rechte Kammer (14) aufweist, die miteinander kommunizieren, und
jeder aus der Mehrzahl von Rückhaltegurten (20) einen linken Gurtabschnitt (22), der das Aufblasen der linken Kammer (12) einschränkt, und einen rechten Gurtabschnitt (24), der das Aufblasen der rechten Kammer (14) einschränkt, aufweist,
wobei der linke Gurtabschnitt (22) aufweist:
einen ersten linken Gurt (22a) mit einem ersten Ende, das mit der Vorderseite des Airbagkissens (10) verbunden ist, und einem zweiten Ende, das mit einem linken Endabschnitt der linken Kammer (12) verbunden ist, und
einen zweiten linken Gurt (22b) mit einem ersten Ende, das mit der Vorderseite des Airbagkissens (10) verbunden ist, und einem zweiten Ende, das mit einem hinteren Endabschnitt der linken Kammer (12) verbunden ist, und
wobei der rechte Gurtabschnitt (24) aufweist:
einen ersten rechten Gurt (24a) mit einem ersten Ende, das mit der Vorderseite des Airbagkissens verbunden (10) ist, und einem zweiten Ende, das mit einem rechten Endabschnitt der rechten Kammer (14) verbunden ist, und
einen zweiten rechten Gurt (24b) mit einem ersten Ende, das mit der Vorderseite des Airbagkissens (10) verbunden ist, und einem zweiten Ende, das mit einem hinteren Endabschnitt der rechten Kammer (14) verbunden ist,
wobei der linke Gurtabschnitt (22) ferner einen dritten linken Gurt (22c) aufweist, mit einem ersten Ende, das mit der Vorderseite des Airbagkissens (10) verbunden ist, und einem zweiten Ende, das mit dem hinteren Endabschnitt der linken Kammer (12) verbunden ist, wobei der dritte linke Gurt (22c) eine Länge hat, die länger als die des zweiten linken Gurtes (22b) ist, und
der rechte Gurtabschnitt (24) ferner einen dritten rechten Gurt (24c) mit einem ersten Ende, das mit der Vorderseite des Airbagkissens (10) verbunden ist, und einem zweiten Ende, das mit dem hinteren Endabschnitt der rechten Kammer (14) verbunden ist, aufweist, wobei der dritte rechte Gurt (24c) eine Länge hat, die länger als die des zweiten rechten Gurtes (24b) ist.

2. Airbagvorrichtung gemäß Anspruch 1, wobei in einem Fall eines Aufprallmodus, in dem der Insasse (P) auf eine Fläche des Airbagkissens (10) prallt, wobei die Fläche dem Insassen (P) zugewandt ist, der Kisseneinstellmechanismus (30) den zweiten linken und rechten Gurt (22b, 24b) durchtrennt.

3. Airbagvorrichtung gemäß Anspruch 1, wobei in einem Fall eines Aufprallmodus, in dem der Insasse (P) auf eine linke Seite des Airbagkissens (10) prallt,
- der Kisseneinstellmechanismus (30) den zweiten linken und rechten Gurt (22b, 24b) durchtrennt oder
- der Kisseneinstellmechanismus (30) den ersten und zweiten linken Gurt (22a, 22b) und den zweiten rechten Gurt (24b) durchtrennt.

4. Airbagvorrichtung gemäß Anspruch 1, wobei in einem Fall eines Frontalaufprallmodus, in dem der Insasse (P) sitzt, wobei der Sitz nach links bewegt wird, oder eines Aufprallmodus, in dem der Insasse (P) auf eine linke Seite des Airbagkissens (10) prallt, der Kisseneinstellmechanismus (30) den ersten und den zweiten linken Gurt (22a, 22b) durchtrennt.

5. Airbagvorrichtung gemäß Anspruch 1, wobei in einem Fall eines Aufprallmodus, in dem der Insasse (P) auf eine rechte Seite des Airbagkissens (10) prallt,
- der Kisseneinstellmechanismus (30) den ersten und den zweiten rechten Gurt (24a, 24b) durchtrennt, so dass das Airbagkissen (10) nach rechts aufgeblasen wird, oder
- der Kisseneinstellmechanismus (30) den ersten und den zweiten rechten Gurt (24a, 24b) und den zweiten linken Gurt (22b) durchtrennt.

6. Airbagvorrichtung gemäß Anspruch 1, wobei in einem Fall eines Frontalaufprallmodus, in dem der Insasse (P) sitzt, wobei ein Sitz nach rechts bewegt wird, oder eines Aufprallmodus, in dem der Insasse (P) auf eine rechte Seite des Airbagkissens (10) prallt, der Kisseneinstellmechanismus (30) den ersten und den zweiten rechten Gurt (24a, 24b) und den zweiten linken Gurt (22b) durchtrennt.

7. Airbagvorrichtung gemäß Anspruch 1, wobei, wenn ein Aufprall erfolgt, während der Insasse (P) auf einem Insassensitz sitzt, der Kisseneinstellmechanismus (30) den ersten linken Gurt (22a) durchtrennt, wenn der Insasse (P) auf einem linken Insassensitz sitzt, und den ersten rechten Haltegurt (24a) durchtrennt, wenn der Insasse (P) auf einem rechten Insassensitz sitzt.

8. Airbagvorrichtung gemäß Anspruch 1, wobei in einem Fall eines Aufprallmodus, in dem der Insasse (P) auf eine linke Seite des Airbagkissens (10) prallt, der Kisseneinstellmechanismus (30) den ersten rechten Gurt (24a) und den ersten und den zweiten linken Gurt (22a, 22b) durchtrennt.

9. Airbagvorrichtung gemäß Anspruch 1, wobei in einem Fall eines Aufprallmodus, in dem der Insasse (P) auf eine rechte Seite des Airbagkissens (10) prallt, der Kisseneinstellmechanismus (30) den ersten linken Gurt (22a) und den ersten und den zweiten rechten Gurt (24a, 24b) durchtrennt.

10. Airbagvorrichtung gemäß irgendeinem der Ansprüche 1 bis 9, wobei der Kisseneinstellmechanismus (30) aufweist:
eine Schneideeinrichtung (32), die an der Vorderseite des Airbagkissens (10) angeordnet ist und wahlweise den linken Gurtabschnitt (22) oder den rechten Gurtabschnitt (24) durchtrennt, und
eine Steuereinrichtung (34), die konfiguriert ist, um Fahrzeugaufprallinformationen zu empfangen und die Schneideeinrichtung (32) so zu steuern, dass der erste Kissenabschnitt des Airbagkissens (10), der der Richtung zugeordnet ist, in der der Insasse (P) im Fall des Fahrzeugaufpralls bewegt wird, mehr aufgeblasen wird als der zweite Kissenabschnitt des Airbagkissens (10).

11. Airbagvorrichtung gemäß irgendeinem der Ansprüche 1 bis 10, wobei der linke Gurtabschnitt (22) und der rechte Gurtabschnitt (24) eine Paneelform haben, die sich in einer vertikalen Richtung des Airbagkissens (10) erstreckt.

12. Airbagvorrichtung gemäß irgendeinem der Ansprüche 1 bis 11, wobei die rechte und die linke Kammer (14, 12) nach links bzw. nach rechts gefaltet sind und dann hintere Endabschnitte der linken und der rechten Kammer (12, 14) nach vorne gefaltet sind,
wobei das Airbagkissen (10) aufgeblasen wird und sich in Richtung zu dem Insassen (P) entfaltet und sich dann nach links und nach rechts entfaltet.

## Revendications

1. Dispositif d'airbag pour un véhicule, le dispositif d'airbag comprenant :
un coussin d'airbag (10) disposé dans le véhicule pour être devant un occupant (P), le coussin d'airbag (10) étant gonflé vers l'arrière en direction de l'occupant (P) et latéralement lors du déploiement ;
une pluralité d'attaches de retenue (20), dont chacune comprend : une première extrémité reliée à une face avant du coussin d'airbag (10) ; et une deuxième extrémité reliée à une partie d'extrémité arrière ou à une partie d'extrémité latérale du coussin d'airbag (10), chacune de la pluralité d'attaches de retenue (20) limitant le gonflage du coussin d'airbag (10) pour déterminer une forme du coussin d'airbag (10) lors du déploiement complet ; et
un mécanisme de réglage de coussin (30) configuré pour couper ou ne pas couper sélectivement la pluralité d'attaches de retenue (20) lors du déploiement, de sorte qu'une première partie de coussin du coussin d'airbag (10), qui est associée à une direction dans laquelle l'occupant (P) est déplacé dans un cas de collision de véhicule, est plus gonflée qu'une deuxième partie de coussin du coussin d'airbag (10),
où le coussin d'airbag (10) comporte une chambre gauche (12) et une chambre droite (14) qui communiquent entre elles, et
chacune parmi la pluralité d'attaches (20) comprend une partie d'attache gauche (22) limitant le gonflage de la chambre gauche (12) et une partie d'attache droite (24) limitant le gonflage de la chambre droite (14),
où la partie d'attache gauche (22) comprend :
une première attache gauche (22a) ayant une première extrémité reliée à la face avant du coussin d'airbag (10) et une deuxième extrémité reliée à une partie d'extrémité gauche de la chambre gauche (12) ; et
une deuxième attache gauche (22b) ayant une première extrémité reliée à la face avant du coussin d'airbag (10) et une deuxième extrémité reliée à une partie d'extrémité arrière de la chambre gauche (12), et
où la partie d'attache droite (24) comprend :
une première attache droite (24a) ayant une première extrémité reliée à la face avant du coussin d'airbag (10), et une deuxième extrémité reliée à une partie d'extrémité droite de la chambre droite (14) ; et
une deuxième attache droite (24b) ayant une première extrémité reliée à la face avant du coussin d'airbag (10) et une deuxième extrémité reliée à une partie d'extrémité arrière de la chambre droite (14),
où la partie d'attache gauche (22) comprend en outre une troisième attache gauche (22c) ayant une première extrémité reliée à la face avant du coussin d'airbag (10), et une deuxième extrémité reliée à la partie d'extrémité arrière de la chambre gauche (12), la troisième attache gauche (22c) ayant une longueur plus longue que celle de la deuxième attache gauche (22b), et
la partie d'attache droite (24) comprend en outre une troisième attache droite (24c) ayant une première extrémité reliée à la face avant du coussin d'airbag (10) et une deuxième extrémité reliée à la partie d'extrémité arrière de la chambre droite (14), la troisième attache droite (24c) ayant une longueur supérieure à celle de la deuxième attache droite (24b) .

2. Dispositif d'airbag selon la revendication 1, dans lequel, dans un cas de mode de collision dans lequel l'occupant (P) heurte une surface du coussin d'airbag (10), la surface faisant face à l'occupant (P), le mécanisme de réglage de coussin (30) coupe les deuxièmes attaches gauche et droite (22b, 24b).

3. Dispositif d'airbag selon la revendication 1, dans lequel, dans un cas de mode de collision dans lequel l'occupant (P) heurte un côté gauche du coussin d'airbag (10),
- le mécanisme de réglage de coussin (30) coupe les première et deuxième attaches gauches (22a, 22b), ou
- le mécanisme de réglage de coussin (30) coupe les première et deuxième attaches gauches (22a, 22b) et la deuxième attache droite (24b).

4. Dispositif d'airbag selon la revendication 1, dans lequel, dans un cas de mode de collision frontale dans lequel l'occupant (P) est assis en déplaçant un siège vers la gauche ou un mode de collision dans lequel l'occupant (P) heurte un côté gauche du coussin d'airbag (10), le mécanisme de réglage de coussin (30) coupe les première et deuxième attaches gauches (22a, 22b).

5. Dispositif d'airbag selon la revendication 1, dans lequel, dans un cas de mode de collision dans lequel l'occupant (P) heurte un côté droit du coussin d'airbag (10),
- le mécanisme de réglage de coussin (30) coupe les première et deuxième attaches gauches (22a, 22b), de sorte que le coussin d'airbag (10) est gonflé vers la droite, ou
- le mécanisme de réglage de coussin (30) coupe les première et deuxième attaches droites (24a, 24b) et la deuxième attache gauche (22b).

6. Dispositif d'airbag selon la revendication 1, dans lequel, dans un cas de mode de collision frontale dans lequel l'occupant (P) est assis en déplaçant un siège vers la droite ou un mode de collision dans lequel l'occupant (P) heurte un côté droit du coussin d'airbag (10), le mécanisme de réglage de coussin (30) coupe les première et deuxième attaches droites (24a, 24b) et la deuxième attache gauche (22b).

7. Dispositif d'airbag selon la revendication 1, dans lequel, lorsqu'une collision se produit alors que l'occupant (P) est assis sur un siège de passager, le mécanisme de réglage de coussin (30) coupe la première attache gauche (22a) lorsque l'occupant (P) est assis sur un siège de passager gauche, et coupe la première attache droite (24a) lorsque l'occupant (P) est assis sur un siège de passager droit.

8. Dispositif d'airbag selon la revendication 1, dans lequel, dans un cas de mode de collision dans lequel l'occupant (P) heurte un côté gauche du coussin d'airbag (10), le mécanisme de réglage de coussin (30) coupe la première attache droite (24a) et les première et deuxième attaches gauches (22a, 22b) .

9. Dispositif d'airbag selon la revendication 1, dans lequel, dans un cas de mode de collision dans lequel l'occupant (P) heurte un côté droit du coussin d'airbag (10), le mécanisme de réglage de coussin (30) coupe la première attache gauche (22a) et les première et deuxième attaches droites (24a, 24b).

10. Dispositif d'airbag selon l'une quelconque des revendications 1 à 9, dans lequel le mécanisme de réglage de coussin (30) comprend :
un organe de coupe (32) disposé sur la face avant du coussin d'airbag (10) et coupant sélectivement la partie d'attache gauche (22) ou la partie d'attache droite (24) ; et
un contrôleur (34) configuré pour recevoir des informations de collision de véhicule, et pour commander l'organe de coupe (32) de sorte que la première partie de coussin du coussin d'airbag (10), qui est associée à la direction dans laquelle l'occupant (P) est déplacé en cas de collision du véhicule, est gonflée plus que la deuxième partie de coussin du coussin d'airbag (10).

11. Dispositif d'airbag selon l'une quelconque des revendications 1 à 10, dans lequel la partie d'attache gauche (22) et la partie d'attache droite (24) ont une forme de panneau s'étendant dans une direction verticale du coussin d'airbag (10).

12. Dispositif d'airbag selon l'une quelconque des revendications 1 à 11, dans lequel les chambres droite et gauche (14, 12) sont pliées vers la gauche et vers la droite, respectivement, et ensuite des parties d'extrémité arrière des chambres gauche et droite (12, 14) sont pliées vers l'avant,
où le coussin d'airbag (10) est gonflé et déployé vers l'occupant (P), et puis est déployé vers la gauche et vers la droite.
